# FASCICULE DE BREVET EUROPEEN

(11) **EP 3 194 309 B1**
(45) Date de publication et mention de la délivrance du brevet: **07.11.2018**
(21) Numéro de dépôt: 15780934.4
(22) Date de dépôt: 22.09.2015
(51) Int. Cl.: B65G 29/02, B65G 47/84, A01K 43/00

(54) **DISPOSITIF DE TRANSFERT DE PIECES EN DEFILEMENT**
VORRICHTUNG ZUR ÜBERTRAGUNG VON BEWEGLICHEN TEILEN
DEVICE FOR TRANSFERRING MOVING PARTS

(30) Priorité: 19.09.2014 FR 1402101
(43) Date de publication de la demande: 26.07.2017
(73) Titulaire: Visio Nerf, 49340 Nuaille (FR)
(72) Inventeur: ROBERT, Pierre, 49300 Cholet (FR); QUEVEAU, Laurent, 49610 Mûrs Erigné (FR)
(74) Mandataire: Gendron, Vincent Christian
(86) Numéro de dépôt international: PCT/IB2015/001663
(87) Numéro de publication internationale: WO 2016/042394

(56) Documents cités:
- WO-A1-00/54579
- WO-A1-88/05416
- WO-A1-2004/078623
- WO-A2-03/002413
- WO-A2-2006/088362
- JP-A- 2003 071 388
- US-A- 5 220 993

## Description

La présente invention a pour objet une installation de traitement de pièces en défilement du type comportant un poste de tri équipé de manière à transférer des pièces individuellement identifiées parmi un ensemble de pièces se présentant défilant en séries de pièces successives en les prélevant sélectivement dans un espace de collecte pour les transférer dans un espace récepteur. Elle s'intéresse plus particulièrement aux conditions auxquelles on a à faire face, par exemple, dans les installations industrielles de l'agro-alimentaire, quand les pièces à trier se présentent ordonnées en lignes et rangées de pièces successives et qu'elles sont fragiles ou autrement délicates à manipuler, quelle qu'en soit la raison. Là n'est pas la seule difficulté que l'on ait à surmonter. La plupart du temps les pièces à traiter sont petites et en très grand nombre et on doit pouvoir les traiter à cadence élevée dans le poste de tri, l'objectif du tri étant par exemple de séparer les pièces en fonction d'une qualité de conformité ou non à des prescriptions définies en les orientant dans deux voies différentes.

Dans des applications au traitement d'oeufs de volailles, des brevets antérieurs de la Demanderesse prévoient d'utiliser une matrice d'outils de transfert pour saisir des oeufs à enlever dans un casier d'oeufs en défilement et les déposer en dehors de la ligne de défilement principale, réservée aux oeufs dits conformes. D'autres dispositifs s'appliquant au traitement d'oeufs font l'objet des documents JP 2003 071388 ou WO 00/54579. Dans le premier de ces documents, des oeufs jugés non conformes à l'utilisation ultérieure prévue sont éliminés de la chaîne de production entre deux unités de convoyage à tapis. Dans le second, on décrit un dispositif de transfert d'oeufs constitué par une matrice de ventouses qui se déplace en va-et-vient de l'un à l'autre de deux casiers d'oeufs, en prélevant des oeufs dans un premier des casiers et en les déposant dans l'autre. Chaque ventouse est commandée pour se déplacer entre deux positions et pour venir en prise avec un oeuf dans l'une de ces positions et pour le libérer dans l'autre. De telles installations impliquent des appareillages et mécanismes coûteux qui sont complexes tant dans leur structure que dans leur fonctionnement. Elles peuvent d'autant moins se prêter à des cadences élevées qu'elles sont incompatibles avec un traitement de pièces en séries défilant en continu par rapport à la matrice de ventouses.

C'est pourquoi, à l'origine de la présente invention, on s'est orienté vers des dispositifs de transport de type à tambour tournant. De fait, dans des domaines tout différents, on connaît déjà de tels dispositifs à tambour qui sont faits, comme il est décrit notamment dans le document de brevet US5220993, ou éventuellement dans les documents WO 2004/078623 ou WO 1988/05416, pour transporter des objets d'un lieu à un autre en les emmenant individuellement par des outils de préhension portés par un tambour rotatif entraîné en rotation sur lui-même.

Le document WO 03/002413 décrit une installation de traitement de pièces se présentant en séries de pièces successives sur un tapis convoyeur selon le préambule de la revendication 1.

Mais ces dispositifs, lourds et coûteux, ne peuvent en aucun cas répondre aux objectifs visés dans le domaine de l'invention. Celle-ci s'inspire du principe d'un tambour tournant dont la périphérie est entraînée à parcourir une surface de collecte où se trouvent les pièces à saisir pour aboutir à une solution originale et efficiente respectant les exigences de cadence élevée pour de petites pièces à traiter en grand nombre ainsi que les précautions souhaitables dans la saisie de pièces fragiles, y compris en termes de sécurité de fonctionnement. De ce dernier point de vue, il est à noter que par exemple dans le cas d'installations de tri des oeufs de volaille en fonction des résultats d'opérations de mirage, chaque oeuf prélevé sur une ligne principale de convoyage doit pouvoir être saisi sans risque de casse et pouvoir être transporté hors de la ligne de convoyage sans courir le risque d'être laché au-dessus, car cela entraînerait la destruction de plein d'oeufs alentour et nécessiterait l'arrêt de la chaîne de production.

Avec ces objectifs en vue, la présente invention a pour objet une installation de traitement de pièces se présentant en séries de pièces successives sur un tapis les entraînant en défilement suivant une ligne de convoyage, selon la revendication 1.

Ces opérations sont effectuées par l'action d'outils de saisie portés en périphérie d'un tambour tournant monté transversalement à la ligne de convoyage et agencé rotatif sur lui-même pour parcourir le tapis en permettant la saisie des pièces non conformes par lesdits outils de saisie et les libérer une fois transportées hors de la ligne de convoyage. Les outils de saisie sont du type à tête de préhension pneumatique comme le sont notamment des ventouses. Celles-ci sont mises en dépression par rapport à l'air environnant à partir d'une chambre de basse pression ménagée à l'intérieur du tambour avec laquelle chacune est reliée par un conduit interne à un bras porteur de l'outil qui est équipé d'une vanne automatiquement commandée pour ouvrir ou fermer le circuit pneumatique passant par ce conduit.

L'invention sera maintenant plus complètement décrite dans le cadre de caractéristiques préférées et de leurs avantages, en faisant référence aux figures 1 à 6 dans lesquelles :
- la figure 1 représente un dispositif de transfert à tambour tournant en fonctionnement au-dessus d'un tapis convoyeur de casiers remplis d'oeufs ;
- les figures 2 et 3 représentent en perspective un des outils de saisie d'oeuf du dispositif de la figure 1, respectivement dans une vue assemblée et dans une vue éclatée ;
- les figures 4 et 5 sont des vues en coupe illustrant de côté, un des outils de saisie et l'oeuf à saisir, dans deux positions distinctes de dégagement et d'engagement ;
- les figures 6 à 9 illustrant des étapes de saisie et de libération d'oeufs au cours du fonctionnement du dispositif de transfert les transportant hors du tapis convoyeur.

Pour illustrer au mieux l'invention en ses caractéristiques propres dans leur structure et leur fonctionnement en liaison les unes avec les autres, on s'est ainsi placé dans un mode en oeuvre particulier de l'invention suivant lequel l'installation de traitement de pièces en défilement est une installation de traitement des oeufs de volailles que les oeufs à traiter parcourent le long d'une ligne de convoyage alors qu'ils sont disposés chacun dans une alvéole de casier de transport.

Dans chaque casier les oeufs sont reçus chacun dans l'une des alvéoles d'un casier et les différents casiers sont entraînés les uns après les autres sur la ligne de convoyage de telle sorte que les oeufs se présentent rangés en séries de colonnes parallèles.

Dans l'installation les oeufs passent ainsi en défilement continu mais à une vitesse qui n'est pas nécessairement constante à travers un poste d'extraction de pièces précédemment identifiées comme étant non conformes aux prescriptions fixées pour les pièces poursuivant leur trajet sur la ligne de convoyage. Dans le cas considéré où les pièces sont des oeufs, les pièces non conformes auront été identifiées comme telles dans un poste de mirage précédant le poste d'extraction.

Conformément à l'invention ce poste d'extraction des oeufs identifiés non conformes comporte un dispositif de transfert à tambour tournant qui est conçu et agencé de manière à prélever individuellement chaque oeuf non conforme par un outil de saisie à tête de préhension pneumatique et l'entraîner hors de la ligne de convoyage.

Plus précisément dans le mode de mise en oeuvre de l'invention choisi chaque tête de préhension d'oeuf en question est une ventouse située en bout d'un bras porteur de forme tubulaire dans lequel est ménagé un conduit de mise en dépression de la ventouse.

Les différentes ventouses se situent en périphérie du tambour. Elles sont fixées par leur bras porteur autour d'un cylindre que comporte le tambour. C'est ce cylindre qui, quand l'installation est en fonctionnement, est entraîné en rotation sur lui-même autour d'un axe orienté transversalement à la ligne de convoyage. Plus particulièrement, au plus simple l'axe de montage est orienté perpendiculairement à la ligne de convoyage supposée rectiligne longitudinalement.

Le cylindre tournant, plus loin souvent appelé rouleau, constitue avec les bras porteurs des ventouses ce que par référence aux figures on désignera souvent comme un moyen support des différentes ventouses.

Conformément à l'invention, chaque bras porteur d'une ventouse est équipé d'une vanne illustrée ici par une réalisation de vanne-tiroir qui est télécommandée pour ouvrir ou fermer la communication entre le conduit interne du bras porteur de ventouse correspondant et une chambre de basse pression qui est ménagée à l'intérieur du tambour, donc en pratique à l'intérieur du cylindre entraîné en rotation. Pour commodité de montage il s'agit d'une chambre annulaire formant une enceinte fixe autour de l'arbre support de l'ensemble tournant.

Quand la vanne est fermée, la ventouse est mise en communication avec l'espace d'air environnant par un orifice ménagé dans la paroi du conduit interne au bras à l'extérieur du cylindre tournant. La commande d'ouverture de la vanne déplace un bouchon d'opercule de manière à dégager une lumière ou orifice de communication avec la chambre de basse pression interne au rouleau. La ventouse se trouve ainsi mise en dépression et elle se ferme sur l'oeuf qui se trouvera en regard.

Dans le cadre de l'application décrite et illustrée aux figures, il convient que chaque ventouse ayant saisi un oeuf non conforme pour l'extraire de la ligne de convoyage, s'en soit libérée en dehors de cette ligne avant de revenir au cours de la rotation du tambour dans une position au-dessus du tapis convoyeur.

Dans l'installation en fonctionnement chaque oeuf emporté par le dispositif de transfert à tambour tournant sera déposé dans un bac de réception de rejets ou dans un tapis récepteur d'entraînement vers une ligne de convoyage secondaire lorsque le bras porteur de la ventouse correspondante se trouve en regard de ce bac ou tapis dans une position différente du tambour, après que le tambour ait parcouru une partie de son cycle de rotation avant son retour au-dessus de la ligne de convoyage.

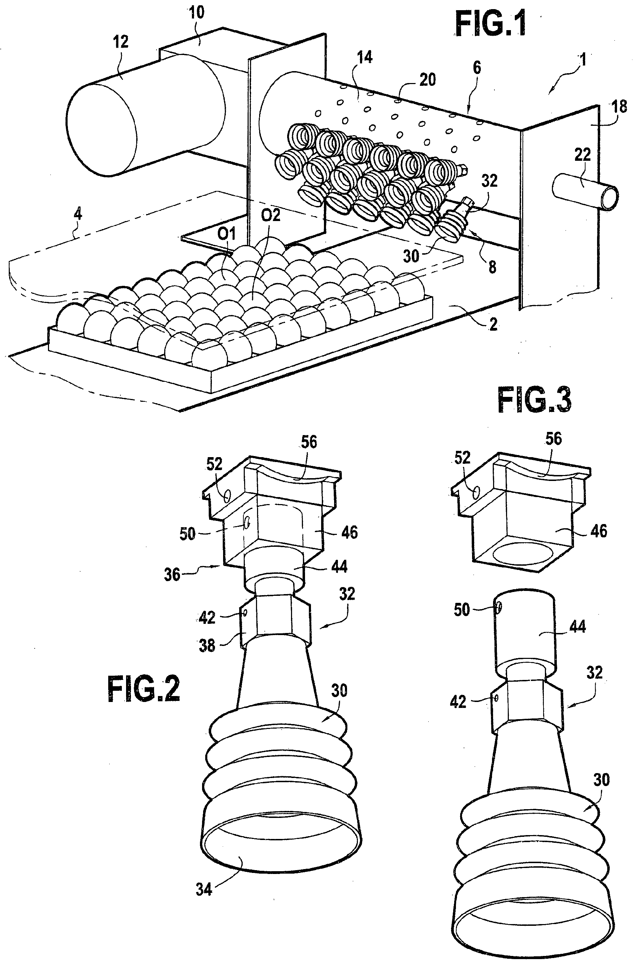

Le dispositif de transfert des oeufs non conformes qui les prélève du tapis convoyeur 2 entraîné le long de la ligne de convoyage principale est représenté en 1 sur la figure 1. Il est disposé dans le poste d'extraction des oeufs au-dessus du tapis 2, qui présente un plan de défilement des oeufs et un axe longitudinal d'avancement des oeufs sur la ligne de convoyage, celle-ci passant sous l'ensemble du tambour tournant. Le bac ayant à collecter les oeufs extraits du tapis de défilement des oeufs conformes 2 est illustré par un moyen récepteur 4 qui se situe au-dessus du tapis principal, à un niveau restant cependant inférieur au niveau haut atteint par les ventouses au cours de la rotation du tambour. Ce moyen récepteur est disposé pour être à la portée des ventouses quand elles passent dans une position de libération des oeufs déterminée au cours de la rotation du tambour tournant, mais il ne passe pas sous ce tambour. S'il ne s'agit pas d'un bac fixe de rejet des oeufs non conformes, il peut être remplacé par des casiers d'oeufs collectant les oeufs non conformes sur une ligne de convoyage secondaire, le moyen récepteur 4 étant alors un tapis convoyeur défilant perpendiculairement au tapis 2 à côté du tambour tournant.

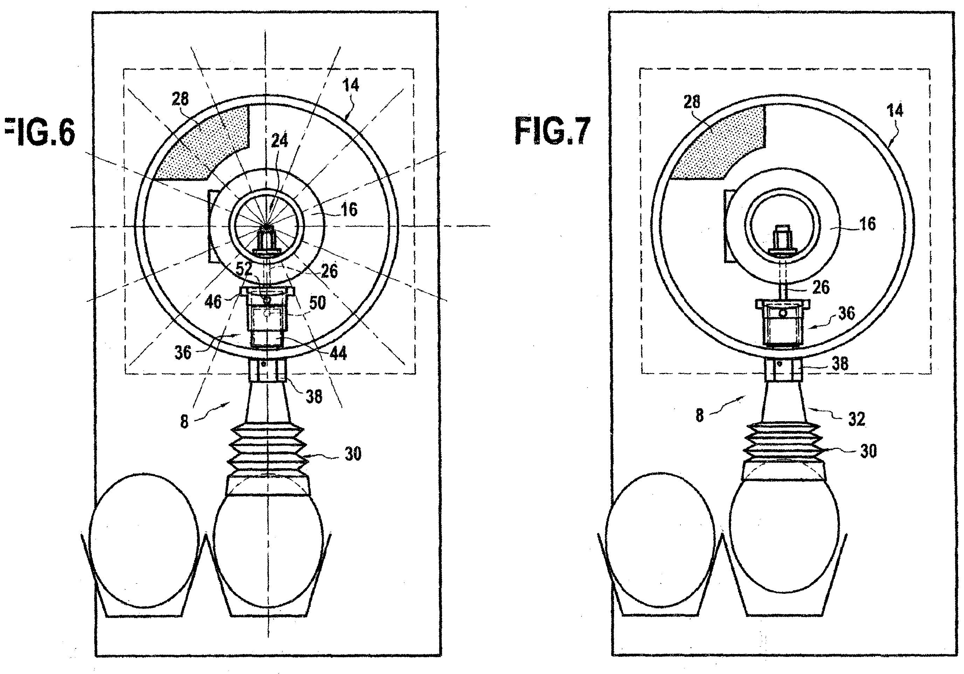

La figure 1 des dessins annexés, conjointement aux figures 6 et 7 montre le moyen support 6 des outils de saisie à ventouses 8, ainsi que des moyens moteurs 10 d'entraînement de ce moyen support en rotation et qu'un module de commande 12 servant à piloter la rotation du moyen support en synchronisme avec le défilement des oeufs sur le tapis principal.

Le moyen support des outils de saisie consiste en un rouleau 14, de section annulaire, délimité radialement par deux cylindres coaxiaux et longitudinalement par des plaques internes aux parois d'extrémités 18 qui ferment hermétiquement la chambre de pression ménagée entre les deux cylindres. On pourra prévoir que l'arbre porteur du rouleau soit monté par rapport aux parois 18 dans des lumières de forme oblongue pour permettre d'ajuster sa position après montage à un niveau plus ou moins éloigné du tapis 2 en accord avec le passage des ventouses en position de préhension par rapport au niveau des oeufs en défilement.

Le rouleau 14 est monté en rotation autour d'un arbre creux 22 (fig. 1), qui est monté lui de façon fixe par rapport au tapis de convoyage. Le rouleau s'étend axialement le long de l'arbre, de sorte que les extrémités de l'arbre dépassent de part et d'autre des extrémités axiales du rouleau.

L'arbre et le rouleau correspondant sont positionnés d'une part parallèlement au plan de défilement des pièces et d'autre part perpendiculairement à l'axe longitudinal d'avancement de ces pièces.

La chambre de pression ménagée à l'intérieur du rouleau 14 jusqu'au cylindre interne 16, autour de l'arbre creux 22, est mise en dépression par l'effet d'une pompe à vide. Un tuyau, ici non visible, permet le raccordement entre l'intérieur du rouleau et la pompe à vide, et l'on prévoit, du fait de l'entraînement en rotation du rouleau, que ce tuyau traverse l'une des parois d'extrémités 18 au niveau du centre de celle-ci et qu'il s'étende à l'intérieur de l'arbre. Des joints tournants sont prévus autour du tuyau au niveau de son passage à travers la paroi d'extrémité afin d'assurer l'étanchéité du rouleau et la conservation de la basse pression y régnant.

Les outils de saisie occupent toute la périphérie du tambour autour du rouleau. Leurs dimensions et leur distribution (diamètre de répartition, pas angulaire entre deux rangées d'outils, pas en distance entre deux outils d'une même rangée) sont ajustées en fonction de la géométrie des casiers d'oeufs et de leurs alvéoles réceptrices d'oeufs.

Dans chaque outil de saisie 8, la ventouse terminale 30 est montée en bout d'un bras porteur formant une pièce intermédiaire creuse 32 qui est fixe sur le rouleau 14 au travers d'ouvertures 20 ménagées à cet effet dans son cylindre extérieur. Chaque ventouse présente une extrémité libre de saisie 34, dont la forme peut être adaptée au type de pièces à saisir. Dans le cas illustré d'une installation de mirage d'oeufs, l'extrémité libre de la ventouse est sensiblement annulaire. A l'intérieur la ventouse est ouverte en communication avec le conduit interne de la pièce intermédiaire 32, sur le circuit pneumatique la reliant à la chambre à vide interne au rouleau rotatif.

La pièce intermédiaire constituant le bras porteur de chaque outil de saisis forme deux parties se situant de part et d'autre du cylindre externe du rouleau, avec une partie interne de réglage 36, se logeant dans l'espace annulaire entre les deux cylindres, et une partie externe 38 de support de la ventouse logée à l'extérieur du rouleau, et ces deux parties de la pièce intermédiaire sont agencées pour pouvoir, dans une position bloquer la communication entre l'intérieur en dépression du rouleau 14 et la ventouse 30, et dans une autre position, permettre cette communication.

La partie de support 38 permet de fixer l'une contre l'autre la ventouse 30, ouverte en son fond 40, et la partie de réglage 36. Cette partie de support, qui présente sur les figures une forme extérieure d'écrou hexagonal, comporte un orifice transversal de mise à l'air libre 42.

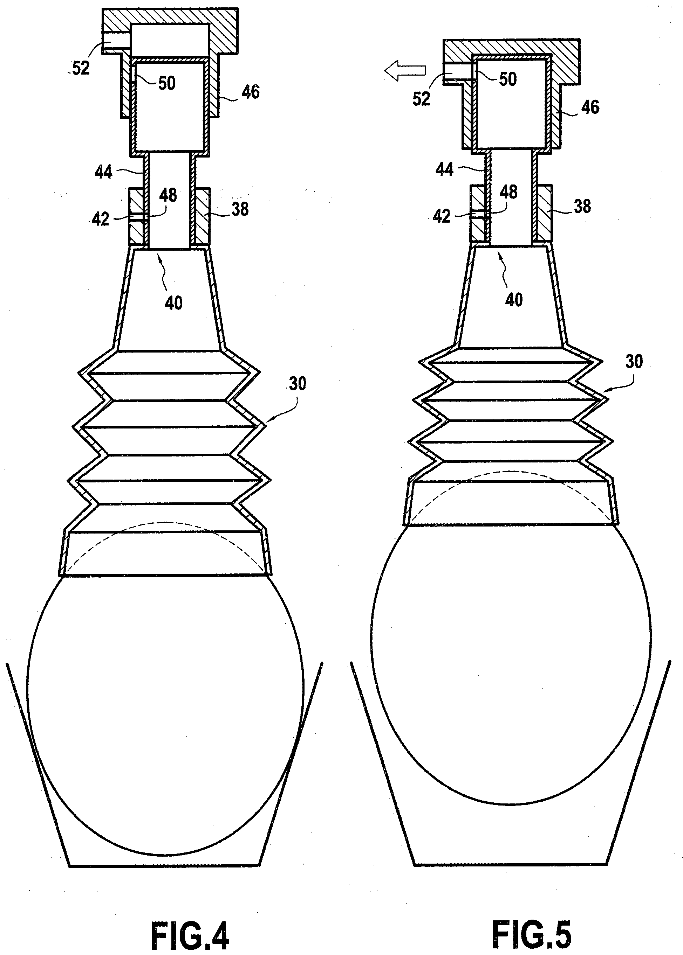

La partie de réglage 36 comporte un tube 44 creux et solidaire de la ventouse 30 à une première extrémité, et un bouchon 46 monté autour de la deuxième extrémité du tube avec un degré de mobilité le long du tube. Le bouchon 46 est mobile en translation entre une position de dégagement (visible sur la figure 3), dans laquelle la ventouse correspondante est apte à libérer un oeuf qui a été saisi et extrait du tapis de convoyage ou inapte à en saisir un sur ce tapis, et une position d'engagement (visible sur la figure 4), dans laquelle la ventouse correspondante est apte à saisir sur le tapis et la retenir en prise pendant son transfert jusqu'à la position où elle sera déposée dans le bac 4 du tapis récepteur des oeufs non conformes.

Le tube 44 est fixe par rapport à la partie de support 38. Il comporte un orifice transversal 48 amené en regard de l'orifice transversal de mise à l'air libre 42 de la partie de support. De la sorte, un flux d'air extérieur pénètre de façon continue à l'intérieur de la ventouse, même lorsque l'extrémité libre de saisie 34 de la ventouse est au contact d'un oeuf.

Le tube 44 et le bouchon mobile 46 comportent chacun un orifice latéral 50 et 52. Le bouchon est mobile entre deux positions extrêmes, une première position extrême permettant la superposition des orifices latéraux tandis que la deuxième position extrême bouche l'orifice latéral 50 du tube.

On définit la première position comme une position d'engagement, le bouchon mobile étant alors rendu mobile vers la ventouse, c'est-à-dire poussé contre la face interne de la paroi latérale du rouleau. Une communication est alors créée entre la ventouse et l'intérieur du rouleau en dépression, ce qui permet la saisie par aspiration d'un oeuf alors en contact avec l'extrémité libre de saisie de la ventouse.

Le diamètre de l'orifice de mise à l'air libre 42 est minime, en tout cas nettement inférieur au diamètre des orifices latéraux du tube 44 et du bouchon 46 adaptés à se superposer. Le petit trou formé de l'orifice 42 permet à l'air ambient de passer pour pénétrer dans la ventouse en permanence, mais lorsque le bouchon est en position d'engagement, le débit d'air aspiré par la pompe à vide est bien supérieur au débit d'air de ce petit trou et il assure une dépression suffisante dans la ventouse pour aspirer l'oeuf.

Dans la position d'engagement, une communication est créée entre la ventouse et le rouleau en dépression via la pièce intermédiaire, tandis que dans la position de dégagement, la partie de réglage ne présente pas de communication avec l'intérieur du rouleau. Ceci se traduit, à l'intérieur du rouleau par le fait que dans la position d'engagement, le bouchon mobile de la partie de réglage est situé à proximité de la paroi du rouleau tandis que dans la position de dégagement, le bouchon mobile de la partie de réglage est situé à distance de la paroi du rouleau.

Pour chaque outil de saisi, le tube percé du bras porteur de la ventouse constitue avec son bouchon une vanne-tiroir sur le circuit peumatique entre la chambre à vide interne au tambour et la ventouse de l'outil. Ces différentes vannes d'ouverture et fermeture du conduit d'alimentation des différentes ventouses sont placées sous la commande de vérins dont les tiges traversent l'arbre creux et dont le corps est situé dans l'espace 24 à l'intérieur de l'arbre, au centre du rouleau. Un seul de ces vérins est représenté par sa tige 26 sur les figures 6 à 9.

Tel que cela est visible sur les figures 6 à 9, un moyen formant came 28 s'étend à l'intérieur du rouleau entre la paroi latérale et l'arbre central. La came est montée dans une position spatiale fixe, indépendant de l'équipement tourant du tambour, avantageusement par fixation sur l'une des parois d'extrémité 18. Cette came a pour fonction de forcer les outils de saisie à prendre une position de dégagement lorsqu'ils rencontrent la came au cours de la rotation du rouleau. La came est disposée pour forcer les parties de support en position de dégagement lorsque le rouleau est dans une position angulaire donnée, ici correspondant à un trois-quarts de tour après la position dans laquelle le même outil est en place pour saisir sur le tapis 2 l'oeuf qui est en face de lui s'il y a lieu.

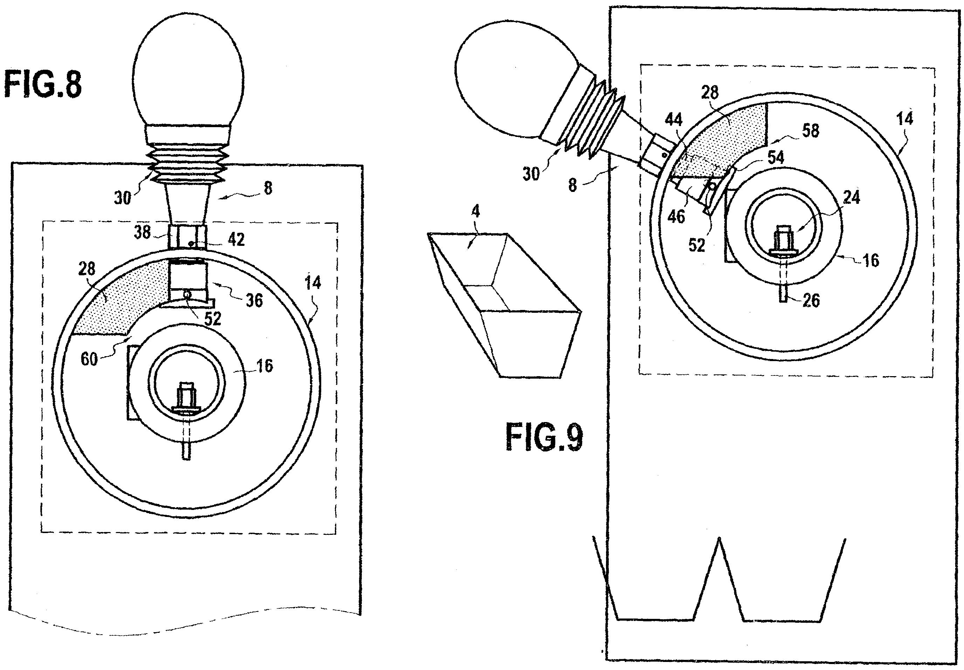

A cet effet, le bouchon 46 présente une collerette 54 qui prolonge radialement vers l'extérieur l'extrémité du bouchon tournée à l'opposé de la ventouse. Cette collerette présente un bossage 56 apte à coopérer avec la forme de la came 28. On peut noter que la came présente une rampe dont une extrémité 58 (fig. 9), dite initiale, ou face d'attaque, s'étend à une distance de la paroi latérale qui est sensiblement égale à la distance à laquelle s'étend le bossage de cette même paroi lorsque le bouchon est dans la position d'engagement, et dont l'autre extrémité 60, dite finale, s'étend à une distance de la paroi latérale qui est sensiblement égale à la distance à laquelle s'étend le bossage de cette même paroi lorsque le bouchon est dans la position de dégagement. On comprend que les formes complémentaires du bouchon et de la partie de support des bras porteurs de ventouses permettent d'amener le bouchon de la pièce intermédiaire en position de dégagement lorsqu'il rencontre la came, montée fixe sur le passage de chacun des bouchons suivant la rotation du rouleau. On comprend que si c'est un bouchon en position de dégagement qui arrive en regard de la came, celle-ci n'a pas d'effet sur la position du bouchon qui reste en position de dégagement.

Par les moyens qui viennent d'être décrits on assure individuellement la commande de chaque vanne de mise en communication d'une ventouse avec l'espace sous vide de manière automatique au cours de chaque cycle de rotation du tambour d'un manière qui est simple, peu coûteuse et particulièrement sûre dans son fonctionnement. Dans d'autres cas d'application de l'invention, on pourrait préférer un pilotage télécommandé des vérins commandant chacun dans le sens poussant sur le bouchon 46 correspondant à l'encontre d'un ressort le ramenant dans sa position rentrée.

A titre d'exemple, en s'appuyant sur les références portées sur la figure 1, dans le cas où l'on souhaite retirer le deuxième oeuf de la quatrième rangée O1 et le quatrième oeuf de la cinquième rangée O2, on s'assure que quand au cours de la rotation du tambour une première rangée de ventouses vient en position à la verticale sous le rouleau (dans la position visible sur la figure 6) au moment du passage à la verticale sous le rouleau de la quatrième rangée d'oeufs du casier, le deuxième vérin de l'alignement de vérins vienne pousser le bouchon mobile associé à la deuxième ventouse de la rangée rendue active sous le rouleau. L'oeuf saisi par l'effet de dépression créé, et ainsi rendu solidaire de la rotation du rouleau, est dégagé par rotation du casier, et l'on note que le sens de rotation du rouleau est choisi pour ne pas aller à contre-sens du défilement des pièces et permettre ainsi le dégagement sans encombres de l'oeuf saisi. Le module de commande pilote la rotation du rouleau pour que la rangée de ventouses suivante prenne la position active sous le rouleau au moment où la cinquième rangée d'oeufs du casier passe sous le rouleau. Là, seul le quatrième vérin de l'alignement est activé pour saisir l'oeuf identifié comme étant non conformes préalablement.

On comprend que l'on pourra prévoir avantageusement que le pas entre chaque rangée de ventouse soit le même que le pas entre chaque rangée du casier, de sorte que la vitesse de rotation et la vitesse de défilement ne changent pas au cours du processus de saisie pour un casier. La vitesse de rotation du rouleau sera modifiée éventuellement pour s'adapter à l'arrivée d'un nouveau casier et elle redeviendra constante si le pas entre chaque rangée du nouveau casier est le même que précédemment. Toutefois, si le pas entre chaque rangée de ventouse n'est pas le même que le pas entre chaque rangée du casier, il suffira au module de commande d'adapter la vitesse entre chaque saisie pour amener une rangée de ventouses en position active sous le rouleau en synchronisme avec le passage d'une rangée de casier sous le rouleau. Selon la distance restant à parcourir au casier pour arriver jusqu'au rouleau, le rouleau est accéléré ou ralenti pendant un temps calculé automatiquement de façon à ce que la première rangée d'oeufs se trouve correctement alignée par rapport à une rangée de ventouses sur le rouleau.

Dans tous les cas, les oeufs saisis continuent leur rotation, solidaire du rouleau, sous l'effet de l'aspiration par dépression de la ventouse, tel que cela est visible sur les figures 8 et 9. Sensiblement au terme d'un demi-tour, la rangée des bras porteurs des ventouses arrive au niveau de la came 28, disposée de façon fixe sur le passage des vérins de commande des outils de saisie. Les parties de réglages dont le bouchon est en position d'engagement (tel que visible figure 8) entrent en contact avec l'extrémité initiale de la rampe formée sur la came, tandis que les parties de réglage dont le bouchon est en position de dégagement, c'est à dire plus éloigné de la paroi latérale du rouleau, évitent ce contact et restent en position de dégagement. La continuité de la rotation amène, par l'effet du contact entre la came et le bossage du bouchon mobile, ce bouchon en éloignement de la paroi latérale du rouleau dans une position de dégagement (visible sur la figure 9) où les orifices latéraux du tube et du bouchon mobile ne sont plus superposés. De la sorte, l'effet de la mise à l'air libre n'est plus contrecarré par l'effet plus important de la dépression et cela entraîne la fin de l'aspiration de l'oeuf par la ventouse. L'oeuf est alors déposé sur le moyen de réception 4. On comprend que l'angle de rotation avant libération de l'oeuf dépend de la position de la came, mais qu'il sera souhaitable que cet angle soit sensiblement supérieur à 180 degrés, pour libérer l'oeuf au cours de sa descente et le dégager de la ventouse par gravité au-dessus du moyen de réception.

## Revendications

1. Installation de traitement de pièces se présentant en séries de pièces successives sur un tapis convoyeur (2) les entraînant en défilement suivant une ligne de convoyage à travers un poste d'extraction de pièces, comportant un dispositif de transfert (1) constitué par des outils de saisie (8) aptes à prélever chacun une pièce dudit tapis convoyeur (2) qui sont portés en périphérie d'un tambour tournant (6) monté transversalement à ladite ligne de convoyage et agencé rotatif sur lui-même, chacun desdits outils (8) comportant une tête de préhension pneumatique (30) en bout d'un bras porteur (32) fixe sur un rouleau externe (14) dudit tambour (6) qu'il traverse vers l'axe de rotation du tambour (6), et ledit bras porteur (32) de chaque outil (8) étant de forme annulaire autour d'un conduit interne débouchant dans ladite tête de préhension (30) qui est en communication avec une chambre de pression ménagée à l'intérieur dudit tambour (6) et maintenue en dépression par rapport à l'air environnant, **caractérisée en ce que**:
- le poste d'extraction de pièces extrait des pièces sélectivement identifiées non conformes hors dudit tapis convoyeur, et
- ledit conduit est équipé d'une vanne d'ouverture et fermeture de ladite communication pour commander l'outil (8) correspondant en saisie d'une pièce puis libération de la pièce saisie au cours de la rotation du tambour (6).

2. Installation selon la revendication 1, **caractérisée en ce que** les têtes de préhension desdits outils (8) sont des ventouses (30) configurées pour venir en prise par aspiration avec des oeufs constituant lesdites pièces.

3. Installation selonn la revendication 1 ou 2, **caractérisée en ce que** les outils de saisie (8) sont commandés individuellement pour saisir ou non la pièce sur laquelle ils arrivent en contact pendant la rotation du tambour (6) suivant qu'elle a ou non été identifiée non-conforme et pour libérer toute pièce saisie après l'avoir entraînée en rotation avec le tambour (6) et la déposer hors de la zone parcourue par le tapis convoyeur (2) en défilement.

4. Installation selon l'une des revendications précédentes, **caractérisée en ce que** le rouleau (14) est entraîné à faire une rotation de trois quarts de tour entre la position où un outil de saisie (8) prélève une pièce sur le tapis convoyeur (2) des pièces conformes et la position où la pièce est relâchée dans un bac récepteur ou déposée sur un tapis secondaire (4).

5. Installation selon l'une des revendications précédentes, **caractérisée en ce que** chaque bras porteur desdits outils est réalisé sous la forme d'une pièce intermédiaire (32) deux parties respectivement de part et d'autre dudit rouleau (14), à savoir une partie interne de réglage (36) se logeant dans ladite chambre de pression interne au tambour tournant (6) et une partie externe de support (38) de la tête de préhension pneumatique (30) située à l'extérieur du rouleau (14).

6. Installation selon la revendication 5, **caractérisée en ce que** ladite partie de support (38) comporte un orifice de mise à l'air libre (42), tandis que la partie de réglage (36) est apte à prendre une position dans laquelle elle permet la communication de ladite tête (30) avec ladite chambre interne au tambour (6) qui est mise en dépression.

7. Installation selon la revendication 6, **caractérisée en ce que** lesdites têtes (30) étant des ventouses (30), ladite partie de réglage (36) comporte un tube (44) fixe, creux et solidaire de la ventouse (30) à une première extrémité, et un bouchon mobile (46) monté autour de la deuxième extrémité du tube (40), tube, ledit bouchon (46) étant mobile entre une position de dégagement, dans laquelle la ventouse (30) correspondante est apte à relâcher une pièce préalablement saisie et une position d'engagement dans laquelle la ventouse (30) correspondante est apte à saisir et à maintenir en prise une pièce en regard.

8. Installation selon la revendication 7, **caractérisée en ce que** dans la position d'engagement, une communication est crée entre la ventouse (30) et la chambre en dépression via la pièce intermédiaire (32), tandis que dans la position de dégagement, le bouchon mobile (46) forme un opercule faisant obstacle à cette communication.

9. Installation selon la revendication 7 ou 8, caractérisér en ce que dans la position d'engagement, le bouchon mobile (46) de la partie de réglage (36) est situé à proximité de la paroi du rouleau (14) tandis que dans la position de dégagement, le bouchon mobile (46) de la partie de réglage (36) est situé à distance de la paroi du rouleau (14).

10. Installation selon l'une des revendications 7 à 9, **caractérisé en ce que** le tube (44) et le bouchon mobile (46) comportent chacun un orifice latéral (50, 52), ces orifices étant conformés pour se superposer lorsque le bouchon mobile (46) est en position d'engagement, poussé contre la paroi du rouleau (14), de manière à créer ladite communication entre la ventouse (30) et la chambre en dépression.

11. Installation selon l'une des revendication 7 à 10, **caractérisée en ce que** le tambour (6) tournant comporte un moyen formant came (28), fixe par rapport à la rotation du tambour (6), pour forcer les bouchons mobiles (46) en position de dégagement lorsque le rouleau (14) est dans une position angulaire donnée.

12. Installation selon la revendication 11, **caractérisée en ce que** la came (28) et le bouchon mobile (46) présentent des formes complémentaires, notamment de type rampe, pour amener le bouchon mobile (46) en position de dégagement lorsqu'elle rencontre la came (28).

13. Installation selon l'une des revendications 7 à 12, **caractérisée en ce que** des moyens pneumatiques (24) qui sont portés par le rouleau (14) sont pilotés en déplacement radial, par rapport au rouleau (14), lesdits moyens pneumatiques consistant en un vérin (26) venant pousser la partie de réglage (36) en position d'engagement contre la paroi du rouleau (14).

14. Installation selon l'une des revendications précédentes, **caractérisée en ce qu'**elle comporte en outre un module de commande (12) apte à calculer des instructions de vitesse de rotation du tambour (6) pour assurer la synchronisation de cette rotation avec le défilement des pièces sur le tapis convoyeur (2), le rouleau (14) étant entraîné en rotation avec une vitesse et une phase synchronisées sur le défilement des pièces.

15. Installation selon l'une des revencations précédentes, configurée pour le traitement d'oeufs de volailles, dans laquelle un dispositif de transfert est disposé en aval du sens de défilement des oeufs sur un tapis convoyeur (2), en sortie d'un poste de mirage en contrôle de conformité des oeufs, ledit dispositif de transfert étant apte à transférer les oeufs non conformes dudit tapis convoyeur (2) à un moyen de réception (4) disposé en parallèle du défilement des oeufs transversalement au tapis convoyeur (2).

## Patentansprüche

1. Anlage zur Bearbeitung von Teilen, die in einer Reihe von aufeinander folgenden Teilen auf einem Förderband (2) erscheinen, das sie entlang einer Förderlinie durch eine Station zur Entnahme von Teilen laufend antreibt, mit einer Überführungsvorrichtung (1), die aus Erfassungswerkzeugen (8) gebildet ist, die jeweils ein Teil vom Förderband (2) abnehmen können, die am Umfang einer Drehtrommel (6) getragen sind, die quer zur Förderlinie montiert ist und sich drehend angeordnet ist, wobei jedes der Werkzeuge (8) einen pneumatischen Greifkopf (30) am Ende eines Trägerarms (32) umfasst, der an einer äußeren Rolle (14) der Trommel (6) fest ist, die er zur Drehachse der Trommel (6) durchquert, und der Trägerarm (32) jedes Werkzeugs (8) eine ringförmige Form um eine interne Leitung aufweist, die in den Greifkopf (30) mündet, die mit einer Druckkammer in Verbindung steht, die im Inneren der Trommel (6) ausgebildet ist und in Bezug auf die Umgebungsluft unter Unterdruck gehalten wird, **dadurch gekennzeichnet, dass**:
- die Station zur Entnahme von Teilen Teile, die selektiv als nicht konform identifiziert werden, von dem Förderband entnimmt, und
- die Leitung mit einem Ventil zum Öffnen und Schließen der Verbindung ausgestattet ist, um das entsprechende Werkzeug (8) zum Erfassen eines Teils, dann zur Freigabe des erfassten Teils im Verlauf der Drehung der Trommel (6) zu steuern.

2. Anlage nach Anspruch 1, **dadurch gekennzeichnet, dass** die Greifköpfe der Werkzeuge (8) Saugnäpfe (30) sind, die dazu ausgelegt sind, durch Ansaugen mit Eiern in Eingriff zu kommen, die die Teile bilden.

3. Anlage nach Anspruch 1 oder 2, **dadurch gekennzeichnet, dass** die Erfassungswerkzeuge (8) individuell gesteuert werden, um das Teil zu erfassen oder nicht, mit dem sie während der Drehung der Trommel (6) in Kontakt kommen, je nachdem, ob es als nicht konform identifiziert wurde oder nicht, und um jedes erfasste Teil freizugeben, nachdem es mit der Trommel (6) zur Drehung angetrieben wurde, und es außerhalb der durch das Förderband (2) laufend durchlaufenen Zone abzulegen.

4. Anlage nach einem der vorangehenden Ansprüche, **dadurch gekennzeichnet, dass** die Rolle (14) so angetrieben wird, dass sie eine Drehung von drei Viertel einer Umdrehung zwischen der Position, in der ein Erfassungswerkzeug (8) ein Teil auf dem Förderband (2) von den konformen Teilen abnimmt, und der Position, in der das Teil in einen Aufnahmebehälter losgelassen oder auf einem sekundären Band (4) abgelegt wird, durchführt.

5. Anlage nach einem der vorangehenden Ansprüche, **dadurch gekennzeichnet, dass** jeder Trägerarm der Werkzeuge in Form eines Stücks (32) zwischen zwei Abschnitten jeweils auf beiden Seiten der Rolle (14), nämlich einem inneren Regelungsabschnitt (36), der sich in der Druckkammer innerhalb der Drehtrommel (6) befindet, und einem äußeren Stützabschnitt (38) des pneumatischen Greifkopfs (30), der sich an der Außenseite der Rolle (14) befindet, verwirklicht ist.

6. Anlage nach Anspruch 5, **dadurch gekennzeichnet, dass** der Stützabschnitt (38) eine Lüftungsöffnung (42) umfasst, während der Regelungsabschnitt (36) eine Position einnehmen kann, in der er die Verbindung des Kopfs (30) mit der Kammer innerhalb der Trommel (6) ermöglicht, die unter Unterdruck gesetzt ist.

7. Anlage nach Anspruch 6, **dadurch gekennzeichnet, dass** die Köpfe (30) Saugnäpfe (30) sind, der Regelungsabschnitt (36) ein festes, hohles Rohr (44), das mit dem Saugnapf (30) an einem ersten Ende fest verbunden ist, und einen beweglichen Stopfen (46), der um das zweite Ende des Rohrs (40) montiert ist, umfasst, wobei der Stopfen (46) zwischen einer Löseposition, in der der entsprechende Saugnapf (30) ein vorher erfasstes Teil loslassen kann, und einer Eingriffsposition, in der der entsprechende Saugnapf (30) ein gegenüberliegendes Teil erfassen und in Eingriff halten kann, beweglich ist.

8. Anlage nach Anspruch 7, **dadurch gekennzeichnet, dass** in der Eingriffsposition eine Verbindung zwischen dem Saugnapf (30) und der Unterdruckkammer über das Zwischenstück (32) erzeugt wird, während in der Löseposition der bewegliche Stopfen (46) einen Verschluss bildet, der dieser Verbindung entgegenwirkt.

9. Anlage nach Anspruch 7 oder 8, **dadurch gekennzeichnet, dass** in der Eingriffsposition der bewegliche Stopfen (46) des Regelungsabschnitts (36) in der Nähe der Wand der Rolle (14) liegt, während in der Löseposition der bewegliche Stopfen (46) des Regelungsabschnitts (36) im Abstand von der Wand der Rolle (14) liegt.

10. Anlage nach einem der Ansprüche 7 bis 9, **dadurch gekennzeichnet, dass** das Rohr (44) und der bewegliche Stopfen (46) jeweils eine seitliche Öffnung (50, 52) umfassen, wobei diese Öffnungen übereinstimmen, um sich zu überlagern, wenn sich der bewegliche Stopfen (46) in der Eingriffsposition befindet, in der er gegen die Wand der Rolle (14) geschoben wird, um die Verbindung zwischen dem Saugnapf (30) und der Unterdruckkammer zu erzeugen.

11. Anlage nach einem der Ansprüche 7 bis 10, **dadurch gekennzeichnet, dass** die Drehtrommel (6) ein Mittel umfasst, das einen Nocken (28) bildet, der in Bezug auf die Drehung der Trommel (6) fest ist, um die beweglichen Stopfen (46) in die Löseposition zu drängen, wenn sich die Rolle (14) in einer gegebenen Winkelposition befindet.

12. Anlage nach Anspruch 11, **dadurch gekennzeichnet, dass** der Nocken (28) und der bewegliche Stopfen (46) komplementäre Formen, insbesondere vom Rampentyp, aufweisen, um den beweglichen Stopfen (46) in die Löseposition zu bringen, wenn er auf den Nocken (28) trifft.

13. Anlage nach einem der Ansprüche 7 bis 12, **dadurch gekennzeichnet, dass** pneumatische Mittel (24), die durch die Rolle (14) getragen sind, zur radialen Verlagerung in Bezug auf die Rolle (14) gesteuert werden, wobei die pneumatischen Mittel aus einem Zylinder (26) bestehen, der den Regelungsabschnitt (36) in die Eingriffsposition gegen die Wand der Rolle (14) schiebt.

14. Anlage nach einem der vorangehenden Ansprüche, **dadurch gekennzeichnet, dass** sie außerdem ein Steuermodul (12) umfasst, das Drehzahlbefehle der Trommel (6) berechnen kann, um die Synchronisation dieser Drehung mit dem Lauf der Teile auf dem Förderband (2) sicherzustellen, wobei die Rolle (14) mit einer Drehzahl und einer Phase zur Drehung angetrieben wird, die mit dem Lauf der Teile synchronisiert sind.

15. Anlage nach einem der vorangehenden Ansprüche, die für die Bearbeitung von Geflügeleiern ausgelegt ist, in der eine Überführungsvorrichtung stromabwärts der Laufrichtung der Eier auf einem Förderband (2) am Ausgang einer Durchleuchtungsstation zur Kontrolle der Konformität der Eier angeordnet ist, wobei die Überführungsvorrichtung die nicht konformen Eier vom Förderband (2) zu einem Empfangsmittel (4), das parallel zum Lauf der Eier angeordnet ist, quer zum Förderband (2) überführen kann.

## Claims

1. A processing facility for items provided in series of successive items on a conveyor web (2) driving them along a convoying line through an items extraction station, including a transfer device (1) constituted by gripping tools (8) ready to take each one an item from said conveyor web (2) which are carried at the periphery of a turning drum (6) mounted transversely to said convoying line and arranged to rotate on itself, each one of said tools (8) including a pneumatic gripping head (30) at the end of a carrying arm (32) fixed on an external roll (14) of said drum (6) which it crosses towards the rotation axis of the drum (6), and said carrying arm (32) of each tool (8) being of an annular shape around an internal conduit emerging into said gripping head (30) which is in communication with a pressure chamber arranged within said drum (6) and maintained under a depression with respect to the surrounding air, **characterized in that**:
the items extraction station extracts from said conveyor web the selectively identified as not compliant items, and
said conduit is provided with a valve intended to open and close said communication in order to control the corresponding tool (8) to grip an item and then to release the item gripped during the rotation of the drum (6).

2. The facility according to claim 1, **characterized in that** the gripping heads of said tools (8) are suction cups (30) configured to engage by aspiration eggs constituting said items.

3. The facility according claim 1 or 2, **characterized in that** the gripping tools (8) are individually controlled to grip or not the item with which they enter in contact during the rotation of the drum (6) according to whether it is or not identified as not compliant and to release any gripped item after having rotated it with drum (6) and to deposit it out of the area crossed by the running conveyor web (2).

4. The facility according to one of the preceding claims, **characterized in that** the roll (14) is rotated on three quarters of a turn between the position where a gripping tool (8) takes an item on the conveyor web (2) from the compliant items and the position where the item is released into a receiving tray or is deposited on a secondary web (4).

5. The facility according to one of the preceding claims, **characterized in that** each carrying arm of said tools is shaped as an intermediary piece (32) of two parts respectively on both sides of said roll (14), namely an internal adjustment part (36) being received within said pressure chamber into the rotating drum (6)
and an external support part (38) of the pneumatic gripping head (30) located outside of the roll (14).

6. The facility according to claim 5, **characterized in that** said support part (38) includes a venting opening (42), while the adjustment part (36) is ready to take a position in which it allows the communication of said head (30) with said drum internal chamber (6) which is set under a depression.

7. The facility according to claim 6, **characterized in that** said heads (30) being suction cups (30),
said adjustment part (36) includes a fixed, hollow tube (44) solidary with the suction cup (30) at a first end, and a moving stopper (46) mounted around the second end of the tube (40), said stopper (46) being movable between a release position, in which the corresponding suction cup (30) is ready to release a beforehand gripped item and an engaging position in which the corresponding suction cup (30) is ready to grasp and to hold a facing item.

8. The facility according to claim 7, **characterized in that**, in the engaging position, a communication is created between the suction cup (30) and the chamber under depression via the intermediary piece (32), while in the release position, the moving stopper (46) forms a cap impeding this communication.

9. The facility according claim 7 or 8, **characterized in that**, in the engaging position, the moving stopper (46) of the adjustment part (36) is located near the roll (14) wall while, in the release position, the moving stopper (46) of the adjustment part (36) is located remotely from the roll (14) wall.

10. The facility according to one of claims 7 to 9, **characterized in that** the tube (44) and the moving stopper (46) include each one a side opening (50, 52), these openings being shaped to be superimposed when the moving stopper (46) is in the engaging position, applied against the roll (14) wall, so as to create said communication between the suction cup (30) and the depressurized chamber.

11. The facility according to one of claims 7 to 10, **characterized in that** the rotating drum (6) includes a cam means (28), secured relatively to the rotation of drum (6), to force the moving stoppers (46) in the release position when the roll (14) is at a given angular position.

12. The facility according to claim 11, **characterized in that** the cam (28) and the moving stopper (46) present complementary shapes, in particular for slope type, to bring the moving stopper (46) in the release position when it contacts the cam (28).

13. The facility according to one of claims 7 to 12, **characterized in that** pneumatic means (24) which are carried by the roll (14) are controlled for radial displacement, with respect to the roll (14), said pneumatic means consisting in a jack (26) pushing the adjustment part (36) towards the engaging position against the roll (14) wall.

14. The facility according to one of the preceding claims, **characterized in that** it further includes a control module ready to calculate rotation speed commands for the drum (6) to ensure the synchronization of this rotation with the running of the items on the conveyor web (2), the roll (14) being rotated with a speed and a phase synchronized with the running of items.

15. The facility according to one of the preceding claims, configured for the poultry eggs processing, wherein a transfer device is arranged downstream in the eggs running direction on a conveyor web (2),
at the outlet of a candling station for the compliance control of eggs, said transfer device being ready to transfer the not compliant eggs on said conveyor web (2) to a receiving means (4) arranged parallelly to the moving eggs, transversely to the conveyor web (2).
